# FASCICULE DE BREVET EUROPEEN

(11) **EP 3 717 279 B1**
(45) Date de publication et mention de la délivrance du brevet: **30.09.2026**
(21) Numéro de dépôt: 18826768.6
(22) Date de dépôt: 28.11.2018
(51) Int. Cl.: B60C 1/00, C08L 7/00, C08L 9/06

(54) **COMPOSITION DE CAOUTCHOUC A HAUT MODULE COMPRENANT UN SYSTEME DE RETICULATION AU SOUFRE EFFICACE**
HOCHMODULIGE KAUTSCHUKZUSAMMENSETZUNG MIT EINEM EFFEKTIVEN SCHWEFELVERTEILUNGSNETZSYSTEM
HIGH MODULUS RUBBER COMPOSITION COMPRISING AN EFFECTIVE SULFUR RETICULATION SYSTEM

(30) Priorité: 30.11.2017 FR 1761393
(43) Date de publication de la demande: 07.10.2020
(73) Titulaire: Compagnie Générale des Etablissements Michelin, 63000 Clermont-Ferrand (FR)
(72) Inventeur: DEPARIS, Xavier, 63040 Clermont-Ferrand Cedex 9 (FR); PAGANO, Salvatore, 63040 Clermont-Ferrand Cedex 9 (FR)
(74) Mandataire: M.F.P. Michelin
(86) Numéro de dépôt international: PCT/FR2018/053026
(87) Numéro de publication internationale: WO 2019/106293

(56) Documents cités:
- EP-A1- 0 901 914
- EP-A1- 2 159 074
- EP-A1- 2 662 405
- EP-B1- 1 578 593
- EP-B1- 1 833 686
- JP-A- 2011 046 817
- KR-B1- 101 457 866
- US-B1- 7 259 205

## Description

L'invention est relative à des compositions de caoutchouc à haut module à base d'élastomère diénique pour pneumatique, en particulier pour bande de roulement de pneumatique.

La rigidité, en particulier celle de la bande de roulement ou de la partie sommet de pneumatique, contribue à la poussée en dérive du pneumatique, transposable au comportement routier.

Pour obtenir des rigidités élevées, il a été proposé d'introduire dans la composition de fortes quantités de charge. Toutefois cette solution impacte la résistance au roulement mais aussi l'endurance du pneumatique en raison d'un fort échauffement. Or, on cherche toujours à limiter la résistance au roulement des pneumatiques afin de diminuer la consommation en carburant et ainsi préserver l'environnement.

Plus classiquement, dans le domaine de la zone basse des pneumatiques, la rigidité peut être augmentée en incorporant des résines renforçantes à base d'un système accepteur/donneur de méthylène. Dans ce type de formulation, le niveau de rigidité est dépendant de la quantité d'accepteur et de donneur de méthylène. Cependant, sur le plan industriel, l'utilisation en grande proportion d'accepteur et de donneur de méthylène peut engendrer certaines contraintes de production au niveau industriel. Augmenter la rigidité de composition de caoutchouc sans augmenter les quantités de résine renforçante utilisée demeure une vraie difficulté technique.

Il existe donc un réel besoin d'augmenter d'avantage la rigidité de compositions pour pneumatiques, par particulier pour bande de roulement de pneumatique, de préférence sans pénaliser les autres propriétés du pneumatique, en particulier de la bande de roulement de pneumatique, ni la mise en œuvre d'un point de vue industriel (processabilité).

Poursuivant ses recherches, la Demanderesse a découvert que l'utilisation d'un système de vulcanisation au soufre efficace permet d'augmenter la rigidité de composition de caoutchouc comprenant une résine renforçante, et ce, à quantité constante de résine renforçante et de soufre.

Ainsi, la présente invention a notamment pour objet une composition de caoutchouc à base d'au moins :
- un élastomère diénique,
- une charge renforçante,
- de 1 à 45 pce de résine renforçante,
- de 1 à 10 pce de soufre,
- de 2 à 15 pce d'accélérateur de vulcanisation,
dans laquelle le rapport du taux de soufre sur le taux d'accélérateur de vulcanisation est inférieur à 0,55, dans laquelle la résine renforçante est une résine époxyde choisie dans le groupe constitué par les composés époxydes aromatiques, les composés époxydes alicycliques, les composés époxydes aliphatiques et leurs mélanges, et dans laquelle l'accélérateur de vulcanisation présente un temps de déclenchement de la vulcanisation, dit « t0 » et mesuré selon la méthode définie dans la description, supérieur ou égal à 3 minutes et est choisi dans le groupe constitué par les accélérateurs du type thiazoles ainsi que leurs dérivés, des accélérateurs de types sulfénamides, les accélérateurs thiourées et leurs mélanges.

L'invention a également pour objet des articles en caoutchouc finis ou semi-finis pour pneumatiques et des pneumatiques comportant une composition de caoutchouc conforme à l'invention.

L'invention ainsi que ses avantages seront aisément compris à la lumière de la description et des exemples de réalisation qui suivent.

### I- DÉFINITIONS

Par l'expression "partie en poids pour cent parties en poids d'élastomère" (ou pce), il faut entendre au sens de la présente invention, la partie, en masse pour cent parties en masse d'élastomère ou de caoutchouc.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente, par l'expression composition "à base de", on entend une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation. A titre d'exemple, une composition à base d'une matrice élastomérique et de soufre comprend la matrice élastomérique et le soufre avant cuisson, alors qu'après cuisson le soufre n'est plus détectable car ce dernier a réagi avec la matrice élastomérique en formant des ponts soufrés (polysulfures, disulfures, mono-sulfure).

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type, par exemple plus de 50%, 60%, 70%, 80%, 90%, voire 100% en poids par rapport au poids total du type de composé. Ainsi, par exemple, une charge renforçante majoritaire est la charge renforçante représentant la plus grande masse par rapport à la masse totale des charges renforçantes dans la composition. Au contraire, un composé "minoritaire" est un composé qui ne représente pas la fraction massique la plus grande parmi les composés du même type, par exemple moins de 50%, 40%, 30%, 20%, 10%, voire moins.

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### II- DESCRIPTION DE L'INVENTION

### II-1 Elastomère diénique

La composition selon l'invention est à base d'au moins un élastomère diénique. Elle peut contenir un seul élastomère diénique ou un mélange de plusieurs élastomères diéniques.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques « essentiellement insaturés », on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions selon l'invention:
a) tout homopolymère obtenu par polymérisation d'un monomère diène conjugué ayant de 4 à 12 atomes de carbone;
b) tout copolymère obtenu par copolymérisation d'un ou plusieurs diènes conjugués entre eux ou avec un ou plusieurs composés vinyle aromatique ayant de 8 à 20 atomes de carbone;
c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5,977,238), des groupes carboxyliques (tels que décrits par exemple dans WO 01/92402 ou US 6,815,473, WO 2004/096865 ou US 2006/0089445) ou encore des groupes polyéthers (tels que décrits par exemple dans EP 1 127 909, US 6,503,973, WO 2009/000750 et WO 2009/000752). Comme autres exemples d'élastomères fonctionnalisés, on peut citer également des élastomères (tels que SBR, BR, NR ou IR) du type époxydés.

Ces élastomères fonctionnalisés peuvent être utilisés en coupage entre eux ou avec des élastomères non fonctionnalisés. Par exemple, on peut utiliser un élastomère fonctionnalisé silanol ou polysiloxane ayant une extrémité silanol, en mélange avec un élastomère couplé et/ou étoilé à l'étain (décrit dans WO 11/042507), ce dernier représentant un taux compris de 5 à 50%, par exemple de 25 à 50%.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418)) comprise entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de -40°C à -80°C, les copolymères isoprène-styrène et notamment ceux ayant une teneur en styrène comprise entre 5% et 50% en poids et une Tg comprise entre -5°C et -60°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -20°C et -70°C.

En résumé, l'élastomère diénique de la composition est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés.

Plus préférentiellement, l'élastomère diénique de la composition est choisi dans le groupe des élastomères diéniques fortement insaturés constitué par les polybutadiènes (BR), les copolymères de butadiène-styrène (SBR), le caoutchouc naturel (NR), et les mélanges de ces élastomères.

L'élastomère diénique est majoritairement constitué de copolymère styrène butadiène (en abrégé SBR), ce SBR pouvant être un SBR émulsion ou ESBR (c'est-à-dire préparé par polymérisation en émulsion), un SBR solution ou SSBR (c'est-à-dire préparé par polymérisation en solution), ou un mélange des deux.

Parmi les copolymères à base de styrène et de butadiène, en particulier SBR, on peut citer notamment ceux ayant une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%.

De préférence, la Tg du copolymère à base de styrène et de butadiène, en particulier du SBR (ESBR ou SSBR), est comprise entre 0 et -80°C, plus particulièrement entre 0°C et - 70°C ; selon un mode de réalisation particulier, la Tg est comprise entre -5°C et -60°C, notamment dans un domaine de -10°C à -50°C. L'homme du métier sait comment modifier la microstructure d'un copolymère à base de styrène et de butadiène, en particulier d'un SBR, pour augmenter et ajuster sa Tg, notamment en jouant sur les teneurs en styrène, en liaisons -1,2 ou encore en liaisons trans-1,4 de la partie butadiénique.

La composition selon l'invention ne nécessite pas l'utilisation d'élastomère thermoplastique pour augmenter davantage la rigidité de la composition. Ainsi, la composition selon l'invention ne comprend pas d'élastomère thermoplastique ou en comprend moins de 10 pce, de préférence moins de 5 pce.

Par élastomère thermoplastique (TPE), on entend, de manière connue, un polymère de structure intermédiaire entre un polymère thermoplastique et un élastomère. Un élastomère thermoplastique est constitué d'un ou plusieurs segments rigides « thermoplastiques » reliés à un ou plusieurs segments souples « élastomères ».

### II-2 Charge renforçante

La composition selon l'invention est également à base d'au moins une charge renforçante connue pour ses capacités à renforcer une composition de caoutchouc utilisable pour la fabrication de pneumatiques.

L'état physique sous lequel se présente la charge renforçante est indifférent, que ce soit sous forme de poudre, de microperles, de granulés, de billes ou toute autre forme densifiée appropriée.

Une telle charge renforçante consiste typiquement en des particules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

La charge renforçante de la composition selon l'invention peut comprendre du noir de carbone, une charge organique autre que le noir de carbone, une charge inorganique ou le mélange d'au moins deux de ces charges. De préférence, la charge renforçante comprend un noir de carbone, une charge inorganique renforçante ou un de leurs mélanges. De préférence, la charge inorganique renforçante est une silice. Plus préférentiellement encore la charge renforçante comprend majoritairement du noir de carbone et minoritairement une charge inorganique. La charge renforçante peut comprendre par exemple de 50 à 100% en masse de noir de carbone, de préférence de 55 à 90% en masse, de préférence de 60 à 80% en masse. De manière particulièrement avantageuse, la charge renforçante comprend exclusivement du noir de carbone.

Selon l'invention, le taux de charge renforçante, de préférence la charge renforçante comprenant majoritairement du noir de carbone, peut être compris dans un domaine allant de 20 à 200 pce, de préférence de 30 à 150 pce, de préférence de 50 à 120 pce.

Les noirs utilisables dans le cadre de la présente invention peuvent être tout noir conventionnellement utilisé dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600). La surface spécifique BET des noirs de carbone est mesurée selon la norme D6556-10 [méthode multipoints (au minimum 5 points) - gaz : azote - domaine de pression relative P/P0 : 0.1 à 0.3].

Comme exemples de charges organiques autres que des noirs de carbone, on peut citer les charges organiques de polyvinyle fonctionnalisé telles que décrites dans les demandes WO 2006/069792, WO 2006/069793, WO 2008/003434 et WO 2008/003435.

Par "charge inorganique renforçante", doit être entendue ici toute charge inorganique ou minérale, quelles que soient sa couleur et son origine (naturelle ou de synthèse), encore appelée charge "blanche", charge "claire" ou même charge "non noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface. En d'autres termes, sans agent de couplage, la charge inorganique ne permet pas de renforcer, ou pas suffisamment, la composition et n'est par conséquent pas comprise dans la définition de « charge inorganique renforçante ».

Comme charges inorganiques renforçantes conviennent notamment des charges minérales du type siliceuses, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

Dans le présent exposé, en ce qui concerne la silice, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

Conviennent également comme charges inorganiques renforçantes les charges minérales du type alumineuses, en particulier de l'alumine (Al₂O₃) ou des (oxyde)hydroxydes d'aluminium, ou encore des oxydes de titane renforçants, par exemple décrits dans US 6,610,261 et US 6,747,087. Bien entendu on entend également par charge inorganique renforçante des mélanges de différentes charges inorganiques renforçantes, en particulier de charges siliceuses et/ou alumineuses hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

L'homme du métier peut trouver des exemples d'agent de couplage dans les documents suivants : WO 02/083782, WO 02/30939, WO 02/31041, WO 2007/061550, WO 2006/125532, WO 2006/125533, WO 2006/125534, US 6 849 754, WO 99/09036, WO 2006/023815, WO 2007/098080, WO 2010/072685 et WO 2008/055986.

La teneur en agent de couplage est avantageusement inférieure à 10 pce, étant entendu qu'il est en général souhaitable d'en utiliser le moins possible. Typiquement lorsque qu'une charge inorganique renforçante est présente, le taux d'agent de couplage représente de 0,5% à 15% en poids par rapport à la quantité de charge inorganique. Son taux est préférentiellement compris dans un domaine allant de 0,5 à 7,5 pce. Ce taux est aisément ajusté par l'homme du métier selon le taux de charge inorganique utilisé dans la composition.

La composition de caoutchouc du pneumatique selon l'invention peut également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des trialcanol-amines, des POS hydroxylés ou hydrolysables, par exemple des α,ω-dihydroxy-polyorganosiloxanes (notamment des α,ω-dihydroxy-polydiméthylsiloxanes), des acides gras comme par exemple l'acide stéarique.

### II-3 Résine renforçante

La composition selon l'invention est également à base d'au moins une résine renforçante (ou résine durcissante) connu de l'homme du métier pour rigidifier des compositions de caoutchouc, notamment en augmentant leur Module de Young ou encore le complexe de cisaillement dynamique G*. Ainsi, une composition de caoutchouc dans laquelle une résine renforçante a été ajoutée présentera une rigidité, notamment un Module de Young ou le complexe de cisaillement dynamique G*, plus élevée que cette composition sans résine renforçante.

L'homme du métier peut mesurer le module de Young (également appelé module d'élasticité ou encore module de traction) des compositions de caoutchouc selon la norme ASTM 412-98a., ou selon la norme NF EN ISO 527-2 (2012) sur une éprouvette de type A selon la norme DIN EN ISO 3167 (2014). Il peut également mesurer le complexe de cisaillement dynamique G* sur un viscoanalyseur (Metravib VA4000), de manière bien connue de l'homme du métier selon la norme ASTM D 5992-96, par exemple en enregistrant la réponse d'un échantillon de composition réticulée (éprouvette cylindrique de 4 mm d'épaisseur et de 400 mm² de section), soumis à une sollicitation sinusoïdale en cisaillement simple alterné, à la fréquence de 10Hz, dans les conditions définies de température (par exemple à 60°C) selon la norme ASTM D 1349-99, ou selon les cas à une température différente. On effectue un balayage en amplitude de déformation de 0,1 à 50% (cycle aller), puis de 50% à 0,1% (cycle retour). Pour le cycle retour, on indique le module complexe de cisaillement dynamique G* à une déformation déterminée (par exemple 10%).

Dans ce cadre, l'augmentation de la rigidité est réalisée par polymérisation ou réticulation de la résine renforçante de manière à former dans la grande majorité des cas un réseau tridimensionnel. Cette réticulation nécessite la plupart du temps l'emploi d'un co-agent (souvent appelé durcisseur) et/ou d'un chauffage (à une température supérieure ou égale de 100°C, voire supérieure ou égale à 130°C).

Le taux de résine renforçante dans la composition selon l'invention est compris dans un domaine allant de 1 à 45 pce. Avantageusement, la composition comprend de 0,5 à 30 pce d'une résine renforçante et de 0,5 à 20 pce d'un co-agent de la résine renforçante.

Les résines renforçantes communément utilisées sont les résines phénoliques, les résines époxydes, les résines benzoxazines, les bismaléimides, les résines polyuréthanes, etc.

Les résines renforçantes classiquement utilisées dans les compositions de caoutchouc pour pneumatiques sont à base d'un système accepteur/donneur de méthylène. Les termes "accepteur de méthylène" et "donneur de méthylène" sont bien connus de l'homme du métier et largement utilisés pour designer des composés aptes à réagir ensemble (réticulation). La réticulation de la résine est provoquée lors de la cuisson de la matrice de caoutchouc, par formation de ponts méthylènes (-CH2-) entre les carbones en positions ortho et/ou para des noyaux phénoliques de la résine et le donneur de méthylène et créant ainsi un réseau de résine tridimensionnel qui vient se superposer et s'interpénétrer avec le réseau charge renforçante/élastomère d'une part et, avec le réseau élastomère/soufre d'autre part (si l'agent de réticulation est le soufre). Des exemples de tels accepteur et donneur de méthylène sont décrits dans WO 02/10269.

Il existe de nombreuses autres résines renforçantes utilisables dans le cadre de la présente invention, associée le cas échéant avec un co-agent de la résine renforçante. A titre d'exemple on peut citer notamment ceux décrit dans les demandes WO 2011/029938, WO 2008/080535, WO 2014/016346, WO2013/017422 ou WO 2014/016344.

**Selon l'invention, la** résine renforçante **est** être une résine époxyde choisie dans le groupe comprenant ou constitué par les composés époxydes aromatiques, les composés époxydes alicycliques, les composés époxydes aliphatiques et leurs mélanges, de préférence la résine renforçante est une résine époxyde choisie dans le groupe comprenant ou constitué par le 2,2 bis[4-(glycidyloxy) phényl] propane, le poly[o-crésylglycidyl éther)-co-formaldéhyde], le poly[phénylglycidyl éther)-co-formaldéhyde], poly[(phenylglycidyl éther)-co(hydroxybenzaldehyde glycidyl éther)] et leurs mélanges.

Le taux de résine renforçante dans la composition est avantageusement compris dans un domaine allant de 0,5 à 30 pce, de préférence de 2 à 20 pce, de préférence encore de 3 à 15 pce.

Les résines renforçantes au sens de la présente invention ne doivent pas être confondues avec les résines hydrocarbonées dites plastifiantes, qui sont par nature miscibles (i.e., compatibles) aux taux utilisés avec les compositions de polymères auxquelles elles sont destinées, de manière à agir comme de véritables agents diluants. Des résines hydrocarbonées plastifiantes ont notamment été décrites par exemple dans la demande WO 2013/092096 ou dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). Elles peuvent être aliphatiques, cycloaliphatiques, aromatiques, aromatiques hydrogénées, du type aliphatique/aromatique.

Selon l'invention, la composition selon l'invention peut comprendre en outre un co-agent de la résine renforçante (ou durcisseur). L'homme du métier sait quel co-agent associer à quelle résine renforçante en se basant sur ses connaissances générales ou sur les documents précités.

La résine renforçante utilisée étant une résine époxy, le co-agent de la résine renforçante est de préférence un durcisseur aminé choisi dans le groupe constitué par les polyamines (notamment les polyamines aliphatiques, les polyamines alicycliques, les amines aliphatiques et les polyamines aromatiques), les dicyandiamides, les hydrazides, les composés imidazole, les sels de sulfonium, les sels d'onium, les ketimines, les anhydrides d'acides et leurs mélanges, de préférence le co-agent de la résine renforçante est un durcisseur aminé choisi dans le groupe constitué par l'éthylènediamine, le diéthylènetriamine, le triéthylènetétramine, le 1,8-diaminooctane, le 1,3 bis(aminométhyl)cyclohexane, que le m-xylylènediamine, le p-xylylènediamine, le m-phénylènediamine, 2,2-bis(4-aminophényl)propane, diaminodiphénylméthane, le 3,5-diéthyl-2,4 diamine toluène, le 3,5-diéthyl-2,6-diamine toluène, le méthyl-diamine thiotoluène , le diméthyl-diamine thiotoluène, diaminodiphénylsulfone, 2,2-bis(4-aminophényl)-p-diisopropylbenzène, le 3,3'-diaminobenzidine, le polyanhydride le 4,4'-(4,4'-isopropylidènediphénoxy)bis(phtalic anhydride), le pyromellitic dianhydride et leurs mélanges.

L'homme du métier sait adapter le taux de co-agent de la résine renforçante en fonction du taux de résine renforçante utilisé. De préférence, le taux de co-agent de la résine renforçante dans la composition est compris dans un domaine allant de 0,5 à 20 pce, de préférence de de 1 à 18 pce, de préférence encore de 2 à 15 pce. Ainsi, la composition selon l'invention peut comprendre de 0,5 à 20 pce, de préférence de 1 à 18 pce, de préférence encore de 2 à 15 pce d'un co-agent de la résine renforçante.

### II-4 Système de réticulation

Le système de réticulation de la composition selon l'invention est à base de 1 à 10 pce de soufre et de 2 à 15 d'accélérateur de vulcanisation, bien connus de l'homme du métier.

Le soufre peut être sous la forme de soufre moléculaire et/ou d'agent donneur de soufre. A titre d'exemple d'agent donneur de soufre, on peut citer notamment le tétrasulfure de dipentaméthylènethiurame (DPTT), le soufre polymérique ou le disulfure de caprolactame (CLD).

Avantageusement, le taux de soufre dans la composition selon l'invention est compris dans un domaine allant de 1 à 8 pce, de préférence de 2 à 8 pce.

D'une manière générale, les accélérateurs de vulcanisations peuvent être classés en plusieurs catégories, selon qu'ils permettent un déclenchement plus ou moins rapide de la vulcanisation. Ce déclenchement de la vulcanisation peut être représenté par la valeur dite « t0 » de l'accélérateur.

La valeur de t0 pour un accélérateur donné doit être mesurée dans une composition de caoutchouc donnée, à une température de vulcanisation donnée. Afin de comparer les accélérateurs dits lents ou rapides selon leur valeur de t0, on se donne ici comme composition de référence une composition comprenant 100 pce de NR, 47 pce de noir de carbone N326, 0,9 pce d'acide stéarique, 7,5 pce de ZnO, 4,5 pce de soufre, et l'accélérateur dont le t0 est à déterminer, à un taux molaire de 2,3 mmol pour 100 parties en poids d'élastomère. La méthode de mesure du t0 est conforme à la norme DIN-53529, à 150°C. Au sens de la présente demande, le « t0 » signifie le t0 tel que défini et mesuré ci-dessus.

Par exemple, le tableau ci-dessous donne le t0 de certains accélérateurs dans la formule proposée et avec la méthode de mesure proposée.

| | DCBS⁽¹⁾ | TBBS⁽²⁾ | CBS⁽³⁾ |
|---|---|---|---|
| Masse molaire (g/mol) | 346,56 | 238,38 | 264,41 |
| t0 (min) | 4,8 | 3,6 | 3,0 |

| | | | |
|---|---|---|---|
| (1) N-N'dicyclohexyl-2-benzothiazol-sulfénamide (« Santocure DCBS » de la société Flexsys) (2) N-ter-butyl-2-benzothiazyle sulfénamide (« Santocure TBBS » de la société Flexsys) (3) N-cyclohexyl-2-benzothiazol-sulfénamide (« Santocure CBS » de la société Flexsys) | | | |

Selon l'invention, l'accélérateur de vulcanisation présente un temps de déclenchement de la vulcanisation, dit « t0 », supérieur ou égal à 3 minutes, par exemple supérieur à 3,5 minutes.

L'accélérateur de vulcanisation est choisi dans le groupe comprenant ou constitué par les accélérateurs du type thiazoles ainsi que leurs dérivés, des accélérateurs de types sulfénamides, les accélérateurs thiourées et leurs mélanges.

De manière particulièrement avantageuse, l'accélérateur de vulcanisation est choisi dans le groupe comprenant ou constitué par le disulfure de 2-mercaptobenzothiazyle (MBTS), le N-cyclohexyl-2-benzothiazyle sulfénamide (CBS), le N,N'-dicyclohexyl-2-benzothiazyle sulfénamide (DCBS), le N-ter-butyl-2-benzothiazyle sulfénamide (TBBS), le N-ter-butyl-2-benzothiazyle sulfénimide (TBSI), le disulfure de morpholine, le N-morpholino-2-benzothiazyle sulfénamide (MBS), le dibutylthiourée (DBTU) et les mélanges de ces composés. De manière tout particulièrement préférée, l'accélérateur de vulcanisation est le N-cyclohexyl-2-benzothiazyle sulfénamide (CBS). L'accélérateur de vulcanisation peut également être choisi dans le groupe comprenant ou constitué par le disulfure de 2-mercaptobenzothiazyle (MBTS), le N,N'-dicyclohexyl-2-benzothiazyle sulfénamide (DCBS), le N-ter-butyl-2-benzothiazyle sulfénamide (TBBS), le N-ter-butyl-2-benzothiazyle sulfénimide (TBSI), le disulfure de morpholine, le N-morpholino-2-benzothiazyle sulfénamide (MBS), le dibutylthiourée (DBTU) et les mélanges de ces composés.

Avantageusement, la composition selon l'invention ne comprend pas d'ultra-accélérateur de vulcanisation présentant un « t0 » inférieur à 3 minutes ou en comprenant moins de 2 pce, de préférence moins de 1 pce, de préférence encore moins de 0,5 pce. Très préférentiellement, la composition selon l'invention ne comprend pas d'ultra-accélérateur de vulcanisation présentant un « t0 » inférieur à 3 minutes. A titre d'exemple d'ultra-accélérateurs de vulcanisation présentant un « t0 » inférieur à 3 minutes, on peut citer ceux choisis dans le groupe comprenant ou constitué par les ultra-accélérateurs du type thiurames, dithiocarbamates, dithiophosphates, xanthates et leurs mélanges. Par exemple, l'ultra-accélérateur de vulcanisation présentant un « t0 » inférieur à 3 minutes peut être choisi dans le groupe comprenant ou constitué par le disulfure de tetrabenzylthiurame (TBzTD), le monosulfure de tétraméthyl thiurame (TMTM), le disulfure de tétraméthyl thiurame (TMTD), le disulfure de tétraéthyl thiurame (TETD), , le disulfure de tétra isobutyl thiurame (TiBTD), le tétrasulfure de dipentaméthylène thiurame (DPTT), le dibutyl dithiocarbamate de zinc (ZDBC), le diéthyl dithiocarbamate de zinc, le diméthyl dithiocarbamate de zinc, le diméthyl dithiocarbamate de cuivre, le diéthyl ditiocarbamate de tellure (TDEC), le dibenzyl dithiocarbamate de zinc (ZBED), le di-isononyl dithiocarbamate de zinc, le pentaméthylène dithiocarbamate de zinc, le dibenzyldithiocarbamate de zinc (ZBEC), l'iso-propyl xanthate de zinc (ZIX), le butyle xanthate de zinc (ZBX), l'éthyle xanthate de sodium (SEX), l'iso-butyle xanthate de sodium (SIBX), l'iso-propyle xanthate de sodium (SIPX), le n-butyl xanthate de sodium (SNBX), l'amyle xanthate de sodium (SAX), l'éthyle xanthate de potassium (PEX), l'amyle xanthate de potassium (PAX), le 2-éthylhexylphosphorodithioate de zinc (ZDT/S) et les mélanges de ces composés.

Le taux d'accélérateur de vulcanisation, de préférence d'accélérateur de vulcanisation présentant un « t0 » supérieur ou égale à 3 minutes, dans la composition selon l'invention, est préférentiellement compris dans un domaine allant de 2 à 10 pce, de préférence de 4 à 10 pce.

Selon l'invention, le rapport du taux de soufre sur le taux d'accélérateur de vulcanisation est inférieur à 0,55. De préférence, le rapport du taux de soufre sur le taux d'accélérateur de vulcanisation est compris entre 0,1 et 0,55.

De préférence, le rapport du taux de soufre sur le taux d'accélérateur de vulcanisation est inférieur ou égal à 0,5. De préférence, le rapport du taux de soufre sur le taux d'accélérateur de vulcanisation est compris dans un domaine allant de 0,15 à 0,5.

A ce système de vulcanisation de base peuvent venir s'ajouter, incorporés au cours de la première phase non-productive et/ou au cours de la phase productive telles que décrites ultérieurement, divers accélérateurs secondaires ou activateurs de vulcanisation connus tels que les oxydes métalliques (typiquement oxyde de zinc), les dérivés de l'acide stéarique (typiquement l'acide stéarique) ou composés équivalents, dérivés guanidiques (en particulier diphénylguanidine), bien connus de l'homme du métier.

A ce système de vulcanisation de base peuvent venir s'ajouter, incorporés au cours de la première phase non-productive et/ou au cours de la phase productive telles que décrites ultérieurement, divers accélérateurs secondaires ou activateurs de vulcanisation connus tels que les oxydes métalliques (typiquement oxyde de zinc), les dérivés de l'acide stéarique (typiquement l'acide stéarique) ou composés équivalents, dérivés guanidiques (en particulier diphénylguanidine).

La composition selon l'invention peut comprendre un taux d'oxyde métallique (de préférence d'oxyde de zinc) inférieur à 7 pce. De préférence, le taux d'oxyde métallique (de préférence d'oxyde de zinc) est compris dans un domaine allant de 1 à 7 pce, de préférence de 2 à 6 pce. Le taux de dérivé d'acide stéarique (c'est à dire d'acide stéarique ou d'un sel d'acide stéarique, préférentiellement d'acide stéarique) est de préférence supérieur à 1 pce. De préférence, le taux de dérivé d'acide stéarique (c'est à dire d'acide stéarique ou d'un sel d'acide stéarique, préférentiellement d'acide stéarique) est compris dans un domaine allant de 1 à 3 pce, plus préférentiellement de 1 à 2 pce.

Dans la présente, on entend par « dérivé d'acide stéarique », de l'acide stéarique ou un sel d'acide stéarique, tous deux étant bien connus de l'homme du métier. A titre d'exemple de sel d'acide stéarique utilisable dans le cadre de la présente invention, on peut citer notamment le stéarate de zinc ou de cadmium.

Est également décrit dans la présente, une composition selon l'invention, dans laquelle le taux de soufre est de plus de 1,5 à 10 pce (en non plus de 1 à 10 pce), le taux d'accélérateur de vulcanisation est de plus de 3 à 15 pce (et non plus de 2 à 15 pce), et dans laquelle le rapport du taux de soufre sur le taux d'accélérateur de vulcanisation est inférieur ou égale à 1 (et non plus inférieur à 0,55). Selon ce mode de réalisation, le taux de soufre peut avantageusement être compris dans un domaine allant de 2 à 8 pce, le taux d'accélérateur de vulcanisation peut avantageusement être compris dans un domaine allant de 4 à 12 pce, et le rapport du taux de soufre sur le taux d'accélérateur de vulcanisation peut être inférieur à 1, de préférence compris dans un domaine allant de 0,1 à 1, de préférence entre 0 1 et 1, de préférence encore entre 0,1 et 0,55.

### II-5 Additifs divers

La composition de caoutchouc selon l'invention peut comporter également tout ou partie des additifs usuels, connus de l'homme de l'art et habituellement utilisés dans les compositions de caoutchouc pour pneumatiques, en particulier de bandes de roulement de pneumatiques, comme par exemple des charges autres que celles précitées, des pigments, des agents de protection tels que cires anti-ozone, anti-ozonants chimiques, anti-oxydants, des agents anti-fatigue.

### II-6 Préparation des compositions de caoutchouc

Les compositions utilisées dans le cadre de la présente invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
a) incorporer à un élastomère diénique, au cours d'une première étape (dite "non-productive"), une charge renforçante, en malaxant thermomécaniquement le tout (par exemple en une ou plusieurs fois), jusqu'à atteindre une température maximale comprise entre 110°C et 190°C ;
b) refroidir l'ensemble à une température inférieure à 100°C ;
c) incorporer ensuite, au cours d'une seconde étape (dite "productive"), un système de réticulation ;
d) malaxer le tout jusqu'à une température maximale inférieure à 110°C.

La résine renforçante peut être introduite soit durant la phase non-productive (a), soit durant la phase productive (c). Lorsque la composition comprend en outre un co-agent de la résine renforçante, la résine renforçante est préférentiellement introduite lors de la phase non productive (a) et le co-agent de la résine renforçante lors de la phase productive (c).

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (élastomère diénique, charge renforçante, résine renforçante), puis dans un deuxième temps, par exemple après une à deux minutes de malaxage, les autres additifs, éventuels agents de recouvrement de la charge ou de mise en œuvre complémentaires, à l'exception du système de réticulation. La durée totale du malaxage, dans cette phase non-productive, est de préférence comprise entre 1 et 15 min.

La première étape de malaxage est généralement réalisée en incorporant la charge renforçante à l'élastomère en une ou plusieurs fois en malaxant thermomécaniquement. Dans le cas où la charge renforçante, en particulier le noir de carbone, est déjà incorporée en totalité ou en partie à l'élastomère sous la forme d'un masterbatch comme cela est décrit par exemple dans les demandes WO 97/36724 ou WO 99/16600, c'est le masterbatch qui est directement malaxé et le cas échéant on incorpore les autres élastomères ou charges renforçantes présents dans la composition qui ne sont pas sous la forme de masterbatch, ainsi que les additifs autres que le système de réticulation.

Après refroidissement du mélange ainsi obtenu, on incorpore alors dans un mélangeur externe tel qu'un mélangeur à cylindres, maintenu à basse température (par exemple entre 40°C et 100°C), le système de réticulation, et le cas échéant le co-agent de la résine renforçante. L'ensemble est alors mélangé (phase productive) pendant quelques minutes, par exemple entre 2 et 15 min.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'un pneumatique.

La cuisson peut être conduite, de manière connue de l'homme du métier, à une température généralement comprise entre 130°C et 200°C, sous pression, pendant un temps suffisant qui peut varier par exemple entre 5 et 90 min en fonction notamment de la température de cuisson, du système de réticulation adopté, de la cinétique de réticulation de la composition considérée ou encore de la taille du pneumatique comprenant un profilé précité.

### II-7 Article de caoutchouc fini ou semi-fini et pneumatique

La présente invention a également pour objet, un article de caoutchouc fini ou semi-fini comprenant une composition selon l'invention.

Elle a également pour objet un pneumatique comprenant une composition selon l'invention ou un article de caoutchouc semi-fini selon l'invention.

L'invention concerne particulièrement des pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, et autres.

La composition définie dans la présente description est particulièrement bien adaptée à la bande de roulement.

Ainsi, dans le pneumatique selon la présente invention la composition peut être présente dans (au moins) la bande de roulement du pneumatique.

L'invention concerne les pneumatiques et produits semi-finis pour pneumatiques précédemment décrits, les articles en caoutchouc, tant à l'état cru (c'est-à-dire, avant cuisson) qu'à l'état cuit (c'est-à-dire, après réticulation ou vulcanisation).

### III- EXEMPLES

### III-1 Mesures et tests utilisés

### Propriétés dynamiques (module de cisaillement dynamique (G*))

Les propriétés dynamiques G* sont mesurées sur un viscoanalyseur (Metravib V A4000), selon la norme ASTM D 5992-96. On enregistre la réponse d'un échantillon de composition vulcanisée voulue (éprouvette cylindrique de 2 mm d'épaisseur et de 78,5 mm2 de section), soumis à une sollicitation sinusoïdale en cisaillement simple alterné, à la fréquence de 10Hz, sous une contrainte appliquée de 0,7 MPa en faisant varier la température de -50°C à +100°C selon la norme ASTM D 1349. On extrait module G* à 23°C des résultats obtenus pour décrire la rigidité des compositions vulcanisées.

### III-2 Préparation des compositions

On procède pour les essais qui suivent de la manière suivante : on introduit dans un mélangeur interne (taux de remplissage final : environ 70% en volume), dont la température initiale de cuve est d'environ 60 °C, successivement, l'élastomère diénique, la charge renforçante, la résine renforçante ainsi que les divers autres ingrédients à l'exception du système de réticulation et du co-agent de la résine renforçante. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre, un accélérateur de vulcanisation et le co-agent de la résine renforçante, sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

Les échantillons ainsi produits ont été cuits pendant 25 minutes à 150°C ou 90 minutes à 160°C dans une presse à cloche.

### III-3 Test de caoutchouterie

Les exemples présentés dans le Tableau 1 ont pour objet de comparer la rigidité (module G* à 23°C) de compositions conformes à l'invention (**C7** à C9.) **et de compositions de référence (C1 à C6)** à celle de compositions témoin comprenant un système de vulcanisation conventionnel (T1 à T9) qui diffèrent des compositions conformes à la présente invention que part le rapport du taux de soufre sur le taux d'accélérateur. Leurs formulations (en pce) et leurs propriétés ont été résumées dans les Tableaux 1 et 2 ci-après.

**Tableau 1**

| **Formulations** | **T1** | **C1** | **T2** | **C2** | **T3** | **C3** | **T4** | **C4** | **T5** | **C5** |
|---|---|---|---|---|---|---|---|---|---|---|
| NR^{(a)} | 100 | 100 | 100 | 100 | - | - | - | - | - | - |
| SBR^{(b)} | - | - | - | - | 100 | 100 | 100 | 100 | 100 | 100 |
| Résine 1^{(c)} | 7 | 7 | 7 | 7 | 7 | 7 | 7 | 7 | 7 | 7 |
| Co-agent 1^{(d)} | 14 | 14 | 14 | 14 | 14 | 14 | 14 | 14 | 14 | 14 |
| Soufre | 2 | 2 | 4 | 4 | 2 | 2 | 4 | 4 | 6 | 6 |
| Accélérateur^{(g)} | 1 | 4 | 2 | 8 | 1 | 4 | 2 | 8 | 3 | 12 |
| Soufre/Accélérateur | 2 | 0,5 | 2 | 0,5 | 2 | 0,5 | 2 | 0,5 | 2 | 0,5 |
| N326^{(h)} | 75 | 75 | 75 | 75 | 75 | 75 | 75 | 75 | 75 | 75 |
| Colophane⁽ⁱ⁾ | 3.5 | 3.5 | 3.5 | 3.5 | 3.5 | 3.5 | 3.5 | 3.5 | 3.5 | 3.5 |
| Huile^{(j)} | 3.5 | 3.5 | 3.5 | 3.5 | 3.5 | 3.5 | 3.5 | 3.5 | 3.5 | 3.5 |
| Cire anti-zone^{(k)} | 1.5 | 1.5 | 1.5 | 1.5 | 1.5 | 1.5 | 1.5 | 1.5 | 1.5 | 1.5 |
| Antioxydant^{(l)} | 2.5 | 2.5 | 2.5 | 2.5 | 2.5 | 2.5 | 2.5 | 2.5 | 2.5 | 2.5 |
| ZnO^{(m)} | 3 | 3 | 3 | 3 | 3 | 3 | 3 | 3 | 3 | 3 |
| Acide stéarique⁽ⁿ⁾ | 1.5 | 1.5 | 1.5 | 1.5 | 1.5 | 1.5 | 1.5 | 1.5 | 1.5 | 1.5 |

| **Propriétés** | | | | | | | | | | |
|---|---|---|---|---|---|---|---|---|---|---|
| Module G*à 23°C | 8 | 15 | 24 | 28 | 6 | 16 | 18 | 24 | 24 | 41 |

| | | | | | | | | | | |
|---|---|---|---|---|---|---|---|---|---|---|
| (a) Caoutchouc naturel (b) Copolymère styrène butadiène avec 26% de motif styrène et 24% de motif 1,2 de la partie butadiénique (Tg -48°C) (c) Résine formophénolique novolaque « Peracit 4536K » de la société Perstorp (d) Donneur de méthylène hexa(methoxymethyl)melamine (WESTCO HMMM) de la société Western Reserve Chemical (g) N-cyclohexyl-2-benzothiazol-sulfénamide « Santocure CBS » de la société Flexsys (h) Noir de carbone N326 (dénomination selon la norme ASTM D-1765) (i) Résine colophane (Abalyn^{™}) de la société Eastman (j) Huile MES/HPD « Flexon 863 » de la société Exxon Mobil (k) Cire anti-ozone « VARAZON 4959 » de la société Sasol Wax (l) N-(1,3-diméthylbutyl)-N'-phényl-p-phénylènediamine « Santoflex 6-PPD » de la société Flexsys (m) Oxyde de zinc (grade industriel - société Umicore) (n) Stéarine « Pristerene 4931 » de la société Uniqema | | | | | | | | | | |

**Tableau 2**

| **Formulations** | **T6** | **C6** | **T7** | **C7** | **T8** | **C8** | **T9** | **C9** |
|---|---|---|---|---|---|---|---|---|
| NR^{(a)} | 100 | 100 | - | - | - | - | - | - |
| SBR^{(b)} | - | - | 100 | 100 | 100 | 100 | 100 | 100 |
| Résine 2^{(e)} | 7.5 | 7.5 | 7.5 | 7.5 | 7.5 | 7.5 | 7.5 | 7.5 |
| Co-agent 2^{(f)} | 16 | 16 | 16 | 16 | 16 | 16 | 16 | 16 |
| Soufre | 2 | 2 | 2 | 2 | 4 | 4 | 6 | 6 |
| Accélérateur^{(g)} | 1 | 4 | 1 | 4 | 2 | 8 | 3 | 12 |
| Soufre/Accélérateur | 2 | 0,5 | 2 | 0,5 | 2 | 0,5 | 2 | 0,5 |
| N326^{(h)} | 75 | 75 | 75 | 75 | 75 | 75 | 75 | 75 |
| Colophane⁽ⁱ⁾ | 3.5 | 3.5 | 3.5 | 3.5 | 3.5 | 3.5 | 3.5 | 3.5 |
| Huile^{(j)} | 3.5 | 3.5 | 3.5 | 3.5 | 3.5 | 3.5 | 3.5 | 3.5 |
| Cire anti-zone^{(k)} | 1.5 | 1.5 | 1.5 | 1.5 | 1.5 | 1.5 | 1.5 | 1.5 |
| Antioxydant^{(l)} | 2.5 | 2.5 | 2.5 | 2.5 | 2.5 | 2.5 | 2.5 | 2.5 |
| ZnO^{(m)} | 3 | 3 | 3 | 3 | 3 | 3 | 3 | 3 |
| Acide stéarique⁽ⁿ⁾ | 1.5 | 1.5 | 1.5 | 1.5 | 1.5 | 1.5 | 1.5 | 1.5 |

| **Propriétés** | | | | | | | | |
|---|---|---|---|---|---|---|---|---|
| Module G* à 23°C | 8 | 21 | 2 | 24 | 11 | 36 | 18 | 51 |

| | | | | | | | | |
|---|---|---|---|---|---|---|---|---|
| (a), (b) et (g) à (n) identiques au Tableau 1 (e) Résine époxy « Araldite ECN 1299 CH » de la société Huntsman (f) Durcisseur aminé « Ethacure 300 » de la société Albemarle | | | | | | | | |

Les résultats présentés dans les Tableaux 1 et 2 montrent que les compositions conformes à l'invention, utilisant un système au soufre efficace dont le ratio massique soufre/accélérateur de vulcanisation est inférieur à 0,55, permet d'améliorer la rigidité des compositions à iso taux de soufre, de résine renforçante et de co-agent de la résine renforçante. Cet effet a été démontré pour différents élastomères diéniques et différents couples de résine renforçante/co-agent de résine renforçante.

## Revendications

1. Composition de caoutchouc à base d'au moins :
- un élastomère diénique, l'élastomère diénique étant majoritairement constitué de copolymère styrène butadiène,
- une charge renforçante,
- de 1 à 45 parties en poids pour cent parties en poids d'élastomère, pce, de résine renforçante,
- de 1 à 10 pce de soufre,
- de 2 à 15 pce d'accélérateur de vulcanisation,
dans laquelle le rapport du taux de soufre sur le taux d'accélérateur de vulcanisation est inférieur à 0,55,
dans laquelle la résine renforçante est une résine époxyde choisie dans le groupe constitué par les composés époxydes aromatiques, les composés époxydes alicycliques, les composés époxydes aliphatiques et leurs mélanges, et
dans laquelle l'accélérateur de vulcanisation présente un temps de déclenchement de la vulcanisation, dit "t0" et mesuré selon la méthode définie dans la description, supérieur ou égal à 3 minutes et est choisi dans le groupe constitué par les accélérateurs du type thiazoles ainsi que leurs dérivés, des accélérateurs de types sulfénamides, les accélérateurs thiourées et leurs mélanges.

2. Composition de caoutchouc selon l'une quelconque des revendications précédentes, dans laquelle le taux de soufre est compris dans un domaine allant de 1 à 8 pce, de préférence de 2 à 8 pce.

3. Composition de caoutchouc selon l'une quelconque des revendications précédentes, dans laquelle l'accélérateur de vulcanisation présente un temps de déclenchement de la vulcanisation, dit « t0 », supérieur à 3,5 minutes.

4. Composition de caoutchouc selon l'une quelconque des revendications précédentes, dans laquelle le taux d'accélérateur de vulcanisation est compris dans un domaine allant de 2 à 10 pce, de préférence de 4 à 10 pce.

5. Composition de caoutchouc selon l'une quelconque des revendications précédentes, dans laquelle le rapport du taux de soufre sur le taux d'accélérateur de vulcanisation est inférieur ou égal à 0,5.

6. Composition de caoutchouc selon l'une quelconque des revendications précédentes, ladite composition ne comprend pas d'ultra-accélérateur de vulcanisation présentant un « t0 » inférieur à 3 minutes ou en comprenant moins de 2 pce, de préférence moins de 1 pce, de préférence encore moins de 0,5 pce.

7. Composition de caoutchouc selon la revendication 6, dans laquelle l'ultra-accélérateur de vulcanisation présentant un « t0 » inférieur à 3 minutes est choisi dans le groupe constitué par les ultra-accélérateurs du type thiurames, dithiocarbamates, dithiophosphates, xanthates et leurs mélanges.

8. Composition de caoutchouc selon l'une des revendications précédentes, dans laquelle la charge renforçante comporte du noir de carbone, une charge inorganique renforçante ou un de leurs mélanges.

9. Composition de caoutchouc selon l'une quelconque des revendications précédentes, dans laquelle le taux de résine renforçante est compris dans un domaine allant de 2 à 20 pce, de préférence de 3 à 15 pce.

10. Composition de caoutchouc selon l'une quelconque des revendications 1 à 9, dans laquelle la résine renforçante est une résine époxyde choisie dans le groupe constitué par le 2,2 bis[4-(glycidyloxy) phényl] propane, le poly[o-crésylglycidyl éther)-co-formaldéhyde], le poly[phénylglycidyl éther)-co-formaldéhyde], poly[(phenylglycidyl éther)-co(hydroxybenzaldehyde glycidyl éther)] et leurs mélanges.

11. Pneumatique comportant une composition de caoutchouc selon l'une quelconque des revendications 1 à 10

12. Pneumatique selon la revendication 11, dans lequel la composition de caoutchouc selon l'une quelconque des revendications 1 à 10 est présente dans au moins la bande de roulement du pneumatique.

## Patentansprüche

1. Kautschukzusammensetzung auf Basis von mindestens:
- einem Dien-Elastomer, wobei das Dien-Elastomer überwiegend aus StyrolButadien-Copolymer besteht,
- einem verstärkenden Füllstoff,
- 1 als 45 Gewichtsteilen auf hundert Gewichtsteile Elastomer, phr, eines verstärkenden Harzes,
- 1 bis 10 phr an Schwefel,
- 2 bis 15 phr eines Vulkanisiationsbeschleunigers,
wobei das Verhältnis des Anteils an Schwefel zum Anteil an Vulkanisationsbeschleuniger weniger als 0,55 beträgt,
wobei es sich bei dem verstärkenden Harz um ein Epoxidharz handelt, das aus der Gruppe ausgewählt ist, welche aus den aromatischen Epoxyverbindungen, den alizyklischen Epoxyverbindungen, den aliphatischen Epoxyverbindungen und deren Mischungen besteht, und
wobei der Vulkanisationsbeschleuniger eine Auslösezeit der Vulkanisation, welche als "t0" bezeichnet wird und nach der Methode gemessen wird, welche in der Beschreibung definiert ist,
von mindestens 3 Minuten hat und aus der Gruppe ausgewählt ist, die aus den Beschleunigern vom Thiazoltyp und deren Derivaten, den Beschleunigern vom Sulfenamidtyp, den Thioharnstoff-Beschleunigern sowie Mischungen davon besteht.

2. Kautschukzusammensetzung nach einem beliebigen der vorhergehenden Ansprüche, wobei der Gehalt an Schwefel in einem Bereich von 1 bis 8 phr, vorzugsweise von 2 bis 8 phr liegt.

3. Kautschukzusammensetzung nach einem beliebigen der vorhergehenden Ansprüche, wobei der Vulkanisationsbeschleuniger eine Auslösezeit der Vulkanisation, welche als "t0" bezeichnet wird, von mehr als 3,5 Minuten aufweist.

4. Kautschukzusammensetzung nach einem beliebigen der vorhergehenden Ansprüche, wobei der Gehalt an Vulkanisationsbeschleuniger in einem Bereich von 2 bis 10 phr, vorzugsweise von 4 bis 10 phr liegt.

5. Kautschukzusammensetzung nach einem beliebigen der vorhergehenden Ansprüche, wobei das Verhältnis das Gehalts an Schwefel zum Gehalt an Vulkanisationsbeschleuniger höchstens 0,5 beträgt.

6. Kautschukzusammensetzung nach einem beliebigen der vorhergehenden Ansprüche, wobei die Zusammensetzung keinerlei Ultra-Vulkanisationsbeschleubiger mit einem "t0" von weniger als 3 Minuten umfasst oder davon weniger als 2 phr, vorzugsweise weniger als 1 phr, noch stärker bevorzugt weniger als 0,5 phr umfasst.

7. Kautschukzusammensetzung nach Anspruch 6, wobei der Ultra-Vulkanisationsbeschleuniger mit einem "t0" von weniger als 3 Minuten aus der Gruppe ausgewählt ist, welche aus den Ultrabeschleunigern vom Thiuramtyp, Dithiocarbamaten, Dithiophosphaten, Xanthaten und Mischungen davon besteht.

8. Kautschukzusammensetzung nach einem der vorhergehenden Ansprüche, wobei der verstärkende Füllstoff Ruß, einen anorganischen verstärkenden Füllstoff oder Mischungen davon umfasst.

9. Kautschukzusammensetzung nach einem beliebigen der vorhergehenden Ansprüche, wobei der Gehalt an verstärkendem Harz im Bereich von 2 bis 20 phr, vorzugsweise von 3 bis 15 phr liegt.

10. Kautschukzusammensetzung nach einem beliebigen der Ansprüche 1 bis 9, wobei es sich bei dem verstärkenden Harz um ein Epoxidharz handelt, das aus der Gruppe ausgewählt ist, welche aus 2,2-bis-[4-(Glycidyloxy) phenyl]propan, Poly[o-kresylglycidylether)-co-formaldehyd], Poly[phenylglycidylether)-co-Formaldehyd], Poly[(phenylglycidylether)-co-(hydroxybenzaldehydglycidylether)] und Mischungen davon besteht.

11. Luftreifen, der eine Kautschukzusammensetzung nach einem beliebigen der Ansprüche 1 bis 10 umfasst.

12. Luftreifen nach Anspruch 11, wobei die Kautschukzusammensetzung nach einem beliebigen der Ansprüche 1 bis 10 zumindest im Laufstreifen des Luftreifens vorliegt.

## Claims

1. Rubber composition based on at least:
- a diene elastomer, the diene elastomer predominantly consisting of a styrene/butadiene copolymer
- a reinforcing filler,
- from 1 to 45 parts by weight, per hundred parts by weight of elastomer, phr, of a reinforcing resin,
- from 1 to 10 phr of sulfur,
- from 2 to 15 phr of vulcanization accelerator,
wherein the ratio of the content of sulfur to the content of vulcanization accelerator is less than 0.55,
wherein the reinforcing resin is an epoxy resin selected from the group consisting of aromatic epoxy compounds, alicyclic epoxy compounds, aliphatic epoxy compounds and mixtures thereof, and
wherein the vulcanization accelerator has a vulcanization initiation time, referred to as "t0" and measured according to the method defined in the description, of greater than or equal to 3 minutes and is selected from the group consisting of accelerators of thiazole type and also derivatives thereof, accelerators of sulfenamide type, thiourea accelerators and mixtures thereof.

2. Rubber composition according to any one of the preceding claims, wherein the content of sulfur is within a range extending from 1 to 8 phr, preferably from 2 to 8 phr.

3. Rubber composition according to any one of the preceding claims, wherein the vulcanization accelerator has a vulcanization initiation time, referred to as "t0", of greater than 3.5 minutes**.**

4. Rubber composition according to any one of the preceding claims, wherein the content of vulcanization accelerator is within a range extending from 2 to 10 phr, preferably from 4 to 10 phr.

5. Rubber composition according to any one of the preceding claims, wherein the ratio of the content of sulfur to the content of vulcanization accelerator is less than or equal to 0.5.

6. Rubber composition according to any one of the preceding claims, said composition comprises no vulcanization ultra-accelerator having a "t0" of less than 3 minutes or comprises less than 2 phr, preferably less than 1 phr, more preferably less than 0.5 phr, thereof.

7. Rubber composition according to Claim 6, wherein the vulcanization ultra-accelerator having a "t0" of less than 3 minutes is selected from the group consisting of ultra-accelerators of the type of thiurams, dithiocarbamates, dithiophosphates or xanthates and mixtures thereof.

8. Rubber composition according to one of the preceding claims, wherein the reinforcing filler comprises carbon black, a reinforcing inorganic filler or a mixture thereof.

9. Rubber composition according to any one of the preceding claims, wherein the content of reinforcing resin is within a range extending from 2 to 20 phr, preferably from 3 to 15 phr.

10. Rubber composition according to any one of Claims 1 to 9, wherein the reinforcing resin is an epoxy resin selected from the group consisting of 2,2-bis[4-(glycidyloxy)phenyl]propane, poly[(o-cresyl glycidyl ether)-co-formaldehyde], poly[(phenyl glycidyl ether)-co-formaldehyde], poly[(phenyl glycidyl ether)-co-(hydroxybenzaldehyde glycidyl ether)] and mixtures thereof.

11. Tyre comprising a rubber composition according to any one of Claims 1 to 10.

12. Tyre according to Claim 11, wherein the rubber composition according to any one of Claims 1 to 10 is present in at least the tread of the tyre.
